# EUROPEAN PATENT APPLICATION

(11) **EP 2 302 974 A1**
(43) Date of publication of application: **30.03.2011**
(21) Application number: 09305897.2
(22) Date of filing: 25.09.2009
(51) Int. Cl.: H04W 64/00

(54) **Method for guiding a user of a mobile station, network element, mobile station, and radio communication network thereof**

(71) Applicant: Alcatel Lucent, 75008 Paris (FR)
(72) Inventor: Fahldieck, Torsten, 71254 Ditzingen (DE); Cesar, Bozo, 70439 Stuttgart (DE); Rueegg, Andreas, 70469 Stuttgart (DE)
(74) Representative: Wetzel, Emmanuelle

(57) **Abstract**

The invention relates to a method for guiding at least one user of at least one mobile station (MS1) in a radio communication network (RCN1), wherein the at least one mobile station (MS1) is connected to a network element (AS-NE) via at least one radio link (RL1), and wherein the method comprises the steps of determining by the network element (AS-NE) at least one further location (LOC2) for the at least one mobile station (MS1) depending on a current location (LOC1) of the at least one mobile station (MS1), and transmitting at least one indication of the at least one further location (LOC2) from the network element (AS-NE) to the at least one mobile station (MS1). The invention further relates to a network element (AS-NE1), to a mobile station (MS1), and to a radio communication network (RCN1).

## Description

### FIELD OF THE INVENTION

The invention relates to a method for guiding at least one user of at least one mobile station according to the preamble of claim 1, to a network element according to the preamble of claim 11, to a mobile station according to the preamble of claim 14, and to a radio communication network comprising the network element.

### BACKGROUND

Radio link quality parameters such as data rate, delay, error rate etc. of a radio link between a base station and a mobile station of a radio communication network depend on several characteristics such as multipath propagation due to scattering objects (buildings, trees, cars, ...) in the environment between the base station and the mobile station or occurrence of interference signals from other mobile stations or from other base stations at a current location of the mobile station.

Radio link parameters such as used modulation scheme, used beamforming scheme and/or used coding scheme can be adapted to a current radio link quality to improve up to a certain level on the one hand a usage of radio resources within the radio communication network and on the other hand a perception of a user of the mobile station taking into account currently running services at the mobile station.

If the perception of the user cannot be satisfactorily improved by adapting the radio link parameters, the mobile station comprising a receiver of a global navigation satellite system and a radio link quality map may guide the user carrying the mobile station from a current location to a further location within the radio communication network to obtain an improved radio link quality at the further location.

The way of improving user perception by guiding the user of the mobile station affects capabilities of the radio communication network and the mobile station.

Therefore, it is on object of the invention to provide an improved method for guiding the user of the mobile station and which allows for manufacturing cost-effective mobile stations.

### SUMMARY

The object is achieved by a method for guiding at least one user of at least one mobile station in a radio communication network, wherein the at least one mobile station is connected to a network element via at least one radio link, and wherein the method comprises the steps of determining by the network element at least one further location for the at least one mobile station depending on a current location of the at least one mobile station, and transmitting at least one indication of the at least one further location from the network element to the at least one mobile station.

The object is further achieved by a network element according to an independent claim 11, by a mobile station according to an independent claim 14, and by a radio communication network comprising the network element.

The at least one further location may offer an improved radio link quality, a similar radio link quality, or even a somewhat lower radio link quality not perceptible by the user of the mobile station.

If the at least one further location offers the improved radio link quality, the invention provides an advantage of increasing a service quality with shorter delays, lower block error rates, and increased data rate for a user and thereby improving a user perception.

With respect to advantages for a network operator, a cell data throughput of a radio cell can be increased or interferences in neighbour radio cells can be reduced by using the further location with the similar radio link quality or the somewhat lower radio link quality. Thereby, also an overall data throughput of the radio communication network can be improved. Further advantages are related to the at least one mobile station, because the at least one mobile station may not require a location detection unit such as a GPS receiver, a radio link quality distribution database of a predefined area, and a guiding algorithm unit for determining the at least one further location. This allows for manufacturing cost-effective mobile stations.

Instead of that, the invention allows concentrating the memory unit for storing the radio link quality distribution database of the predefined area and the guiding algorithm unit in the network element or in several network elements distributed for example across base stations of the radio communication network.

The invention even allows for using mobile stations according to the prior art by simply performing a software update at the mobile stations to be able to receive the indication of the further location, to process the indication of the further location, and to indicate the further location to the user of the mobile station.

In an embodiment of the invention, the indication is an indication of an object of a landscape close to the at least one further location. The object of the landscape may be for example a street crossing, a street number, or a distinctive object of the landscape such as a monument or a telephone box, which should be preferably in a visual range of the at least one user. This allows the at least one user to easily find the at least one further location without requiring further orientation equipment such as a compass or a GPS receiver.

In a further embodiment of the invention, the indication is an indication of a point of the compass for the at least one further location. The direction may be for example "N" for north, "NW" for northwest etc. This allows for example the at least one user being aware of orientations at the at least one current location by using for example a position of the sun and a time of day to find the at least one further location by s imply walking along the indicated point of the compass. Preferably, the mobile station comprises an electronic compass and the point of the compass is indicated via a compass rose on a graphical user interface. Thereby, the point of the compass can be indicated to the user at any night and day time without requiring determining the position of the sun.

In an even further embodiment of the invention, the indication is an indication further providing a distance between the current location and the at least one further location.

This provides a benefit to the user to know the distance between the current location and the further location and to know how far the user has to walk or to drive to reach the further location.

Preferably, some or all of the above mentioned embodiments may be used in combination to indicate the at least one further location. This allows for a more precise indication of the at least one further location.

In a preferred embodiment of the invention, the method further comprises the steps of predicting by the network element at least one current direction of movement of the at least one mobile station, and alerting by the network element the at least one user of a radio link quality degradation. This provides the advantage of avoiding the radio link quality degradation or even connection failures, if the user of the mobile station uses the alert to halt the movement or to move in an adjusted direction of movement. The preferred embodiment is helpful in critical applications, when a permanent radio connection is required, such as in medical monitoring.

Preferably, the network element may determine the adjusted direction of movement having a similar radio link quality or even an improved radio link quality in comparison to the current location and the current direction of movement.

In two embodiments of the invention, the method further comprises the step of determining the at least one current location by the network element or the method further comprises the steps of determining the at least one current location by a base station, and transmitting an indication of the at least one current location from the base station to the network element. The first one of the two embodiments of the invention provides a benefit of centralizing the determining step of the at least one current location at the network element and the second one of the two embodiments of the invention provides a benefit of distributing the determining step of the at least one current location to base stations of the radio communication network.

In a further embodiment of the invention, the method further comprises the step of measuring signals of the at least one radio link and wherein the at least one current location of the at least one mobile station is determined by the measured signals. This provides a first advantage of not requiring a location detection unit such as a GPS receiver within the at least one mobile station, which allows for manufacturing smaller mobile stations at lower cost and with lower power consumption.

In a first and a second further embodiment of the invention, the at least one current location of the at least one mobile station is determined by a time delay of arrival of the measured signals or an angle of arrival of the measured signals. This allows for alternative methods to flexibly determine the at least one current location depending on the capabilities of the at least one mobile station or of base stations of the radio communication network such as antenna arrangement and antenna complexity (e.g. antenna system with multiple antenna elements) or multipath transmission (e.g. cooperative MIMO or soft handover such as used in UMTS).

In a third further embodiment of the invention, the measured signals are downlink signals, and the method further comprises the step of transmitting measurement values of the measured signals from the at least one mobile station to the network element. This provides a benefit of not requiring in all mobile stations a location detection unit, which evaluates the measured signals. Instead of that, a centralized location detection unit at the network element or several distributed location detection units at base stations of the radio communication network may be used.

In a fourth further embodiment of the invention, the measured signals are uplink signals. This provides an advantage of not needing a signalling of the current location of the mobile station or the measurement values of the measured signals from the mobile station to the network element. Thereby, fewer radio resources for signalling from/to the mobile stations are utilized. In two even further embodiments of the invention, the network element is a base station or an application server.

The first of the two even further embodiments of the invention provides a benefit of not requiring a separate network element in a communication system. In addition, this allows for providing a guiding feature to the users of the mobile stations by a third party service provider being somewhere located in the internet, if the third party service provider is allowed to evaluate and use a radio link quality map of the radio communication network.

The second of the two even further embodiments of the invention provides advantages of distributing processing load to the base stations and of reducing problems with respect to a single point of failure. Further advantageous features of the invention are defined and are described in the following detailed description of the invention.

### BRIEF DESCRIPTION OF THE FIGURES

The embodiments of the invention will become apparent in the following detailed description and will be illustrated by accompanying figures given by way of non-limiting illustrations.
Figure 1 shows schematically a block diagram of a communication system according to a first embodiment of the invention.
Figure 2 shows schematically a block diagram of a communication system according to a second embodiment of the invention.
Figure 3 shows schematically a block diagram of a method according to embodiments of the invention.
Figure 4 shows schematically a block diagram of a further method according to further embodiments of the invention.
Figure 5 shows schematically a block diagram of a network element according to the embodiments of the invention.
Figure 6 shows schematically a block diagram of a mobile station according to the embodiments of the invention.

### DESCRIPTION OF THE EMBODIMENTS

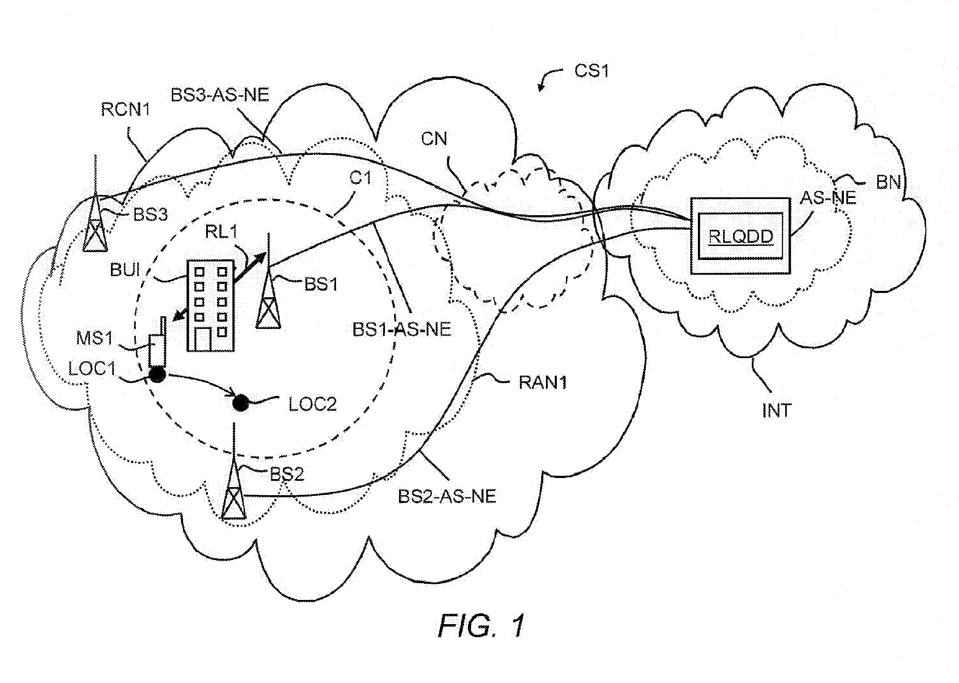

Figure 1 shows schematically in a block diagram a communication system CS1 according to a first embodiment of the invention. The communication system CS1 may comprise a radio communication network RCN1 and an Internet INT connected to the radio communication network RCN1.

The Internet INT is a global system of interconnected networks such as wireless or wireline private, public, academic, business, and/or government networks. The Internet may comprise a business network BN such as for example an application provider network.

The business network BN may comprise a network element AS-NE such as an application server. The network element NE may comprise a radio link quality distribution database RLQDD, which stores radio link quality values for locations of mobile stations in a predefined area of the radio communication network RCN1. The predefined area may comprise a subset of radio cells of the radio access network RAN1 or all radio cells of the radio access network RAN1. The radio link quality distribution database RLQDD may be based on previously reported radio signal measurements or on simulations regarding a landscape of the predefined area such as mountains, vales, woods, buildings, etc.

The radio communication network RCN1 comprises a radio access network RAN1 and a core network CN connecting the radio access network RAN1 to the Internet INT. The radio communication network RCN1 may be for example a 3GPP UMTS network (3GPP = 3rd Generation Partnership Project, UMTS = Universal Mobile Telecommunication Systems), a 3GPP LTE network (LTE = Long Term Evolution), or a WiMAX network (WiMAX = Worldwide Interoperability for Microwave Access).

The radio access network RAN1 comprises base stations BS1, BS2, BS3 and a mobile station MS1 connected to the base station BS1 via a radio link RL1. The base stations BS1, BS2, BS3 are connected to the network element AS-NE via connections BS1-AS-NE, BS2-AS-NE, BS3-AS-NE.

A coverage area of the base station BS1 is given by a radio cell C1. Further radio cells, base stations and mobile stations of the radio access network RAN1 are not shown for simplification.

The base station BS1 may be for example a BTS (BTS = Base Transceiver Station) of EDGE (EDGE = Enhanced Data Rate for GSM Evolution), a NodeB of UMTS, an enhanced NodeB of LTE, or a WiMAX base station. The mobile station MS1 may be for example a smartphone, a handheld, a laptop, a satellite navigation device, or any other transportable device with a radio interface. The term "mobile station" maybe considered synonymous to a mobile unit, access terminal, user equipment, remote station, access terminal etc.

The radio cell C1 may be for example located at a city centre of a town, at a park with many trees, at an exhibition hall or at another area with a large variation of line-of-sight locations and non-line-of-sight locations of the mobile station MS1 according to a location of the base station BS1 or more precisely described according to a location of an antenna system of the base station BS1.

A building BUI impedes a line-of-sight radio link connection of the radio link RL1 between the mobile station MS1 and the base station BS1 according to a current location LOC1 of the mobile station MS1. This may result in a radio link quality of the radio link RL1 with a data rate, a delay, and an error rate, which is lower in comparison to an undisturbed line-of-sight radio link connection. The lower radio link quality may negatively influence a perception of services running at the mobile station MS1 by a user of the mobile station MS1.

The user of the mobile station MS1 may for example activate at the mobile station MS1 a guiding service with costs, which can determine at the network element AS-NE a further location LOC2 for the mobile station MS1, which provides a better radio link quality than a radio link quality at the current location LOC1. Therefore, the current location LOC1 of the mobile station MS1 and the radio link quality at the current location are determined and may be indications of the current location LOC1 of the mobile station MS1 and of the radio link quality of the current location may be transmitted to the network element AS-NE. After determining the further location LOC2 at the network element AS-NE via the radio link quality distribution database RLQDD, the network element AS-NE transmits an indication for the further location LOC2 to the mobile station MS1. Thereby, the user of the mobile station MS1 can be guided from the current location LOC1 to the further location LOC2 within the radio access network RAN1.

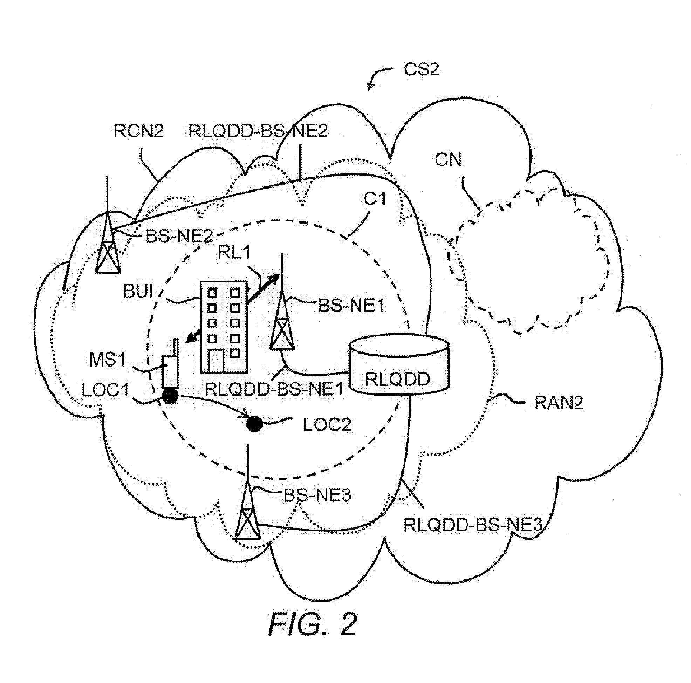

Figure 2 shows schematically in a block diagram a communication system CS2 according to a second embodiment of the invention. The elements in Figure 2 that correspond to elements of Figure 1 have been designated by same reference numerals.

The communication system CS2 may comprise a radio communication network RCN2. The radio communication network RCN2 comprises the core network CN and a radio access network RAN2. The radio access network RAN2 comprises base stations BS-NE1, BS-NE2, BS-NE3 and the mobile station MS1. A coverage area of the base station BS-NE1 is given by the radio cell C1.

Further radio cells, base stations and mobile stations of the radio access network RAN2 are not shown for simplification.

In comparison to the first embodiment of the invention, no separate network element is used in the Internet INT. Instead of that, functional means of the network element according to the invention are located and distributed at the base stations BS_NE1, BS_NE2, BS_NE3.

Alternatively, the functional means of the network element are located for example at an RNC (RNC = Radio Network Controller), a GGSN (GGSN = Gateway GPRS Support Node), a S-GW (S-GW = Serving GateWay) or a MME (MME = Mobility Management Entity) of the radio communication network RCN2.

The radio link quality distribution database RLQDD may be centralized within the radio communication network RCN2 and the base stations BS_NE1, BS_NE2, BS_NE3 are connected via connections RLQDD-BS-NE1, RLQDD-BS-NE2, RLQDD-BS-NE3 to the radio link quality distribution database RLQDD.

Alternatively, the radio link quality distribution database RLQDD may be distributed across the base stations BS_NE1, BS_NE2, BS_NE3 and the distributed radio link quality distribution databases may comprise data for an area of a specific radio cell and preferably may comprise data for adjacent areas of neighbouring radio cells.

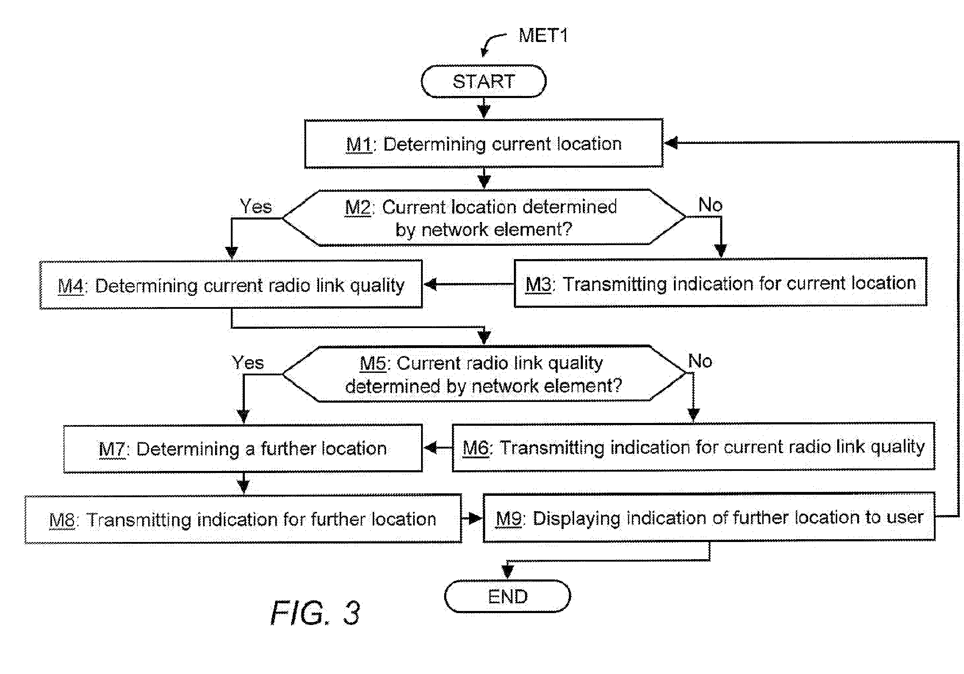

Referring to Figure 3, a block diagram of a method MET1 according to the embodiments of the invention is shown.

The sequence and the number of the steps for performing the method MET1 is not critical, and as can be understood by those skilled in the art, that the sequence and the number of the steps may vary without departing from the scope of the invention, e.g. some of the steps may be performed simultaneously.

The method MET1 may be started automatically by starting a service at the mobile station MS1. In an alternative, the method MET1 may be started by the user of the mobile station MS1 via a GUI (GUI = graphical user interface) such as a touch-sensitive display or a push button of the mobile station MS1.

In a first step M1, the current location of the mobile station MS1 is determined. There are several possibilities for performing the first step M1. In a first alternative, the current location may be determined by measuring and evaluating GPS signals of satellites by a GPS receiver of the mobile station MS1.

In a second alternative, a trilateration and triangulation method maybe used. Therefore, a further substep of measuring downlink signals or uplink signals of the radio link RL1 is required. The second alternative may use a TDOA technique (TDOA = time delay of arrival) by measuring time delays of received signals, which have been propagated via different propagation paths.

E-OTD (E-OTD = Enhanced Observed Time Difference) is for example a technology, which uses a mathematical algorithm to identify the current location of the mobile station MS1 based on a time the uplink signals take to reach a set of base stations BS1, BS2, BS3 and then through a triangulation scheme determines the current location LOC1 of the mobile station MS1. A similar technique of the E-OTD technology is known as TA (TA = timing advance).

In an alternative, downlink signals may be measured, if the mobile station MS1 comprises a database with positions (of least degree of longitude and degree of latitude, preferably also height above sea level) of the base stations BS1, BS2, BS3 of a predefined area of the radio communication network RCN1 and the base stations BS1, BS2, BS3 transmit downlink signals such as pilots in a synchronised way. The mobile station MS1 measures time, differences of signals received from the base stations BS1, BS2, BS3 and determines its location on a basis of the measured time differences and the position information of the base stations BS1, BS2, BS3, In a further alternative, the mobile station MS1 transmits in a sub-step measurement values such as the measured time differences of the signals to the base station BS1 or to the network element AS-NE, BS-NE and the base station) BS1 or the network element AS-NE, BS-NE1 determines the current location LOC1 of the mobile station MS1. In an even further alternative, a triangulation method may be used to measure an AOA (AOA = angle of arrival) of the downlink signals or the uplink signals based on MIMO (MIMO = multiple input multiple output) or SIMO (SIMO = single input multiple output) using multiple antenna elements at a receiver such as described for example in US 6,484,031 B1. In uplink direction, the uplink signals may be measured by two or more base stations BS1, BS2, BS3 each comprising an antenna system with two or more antenna elements or by a single base station BS1 comprising two or more antenna systems with two or more antenna elements, which are distributed across two or more locations of the radio cell 11 Cl, In downlink direction, the downlink signals of two or more base stations BS1, BS2, BS3 may be measured and a location of the mobile station MS1 can be calculated by knowing locations of the two or more base stations BS1, BS2, BS3 and by knowing angle information of direction of the downlink signals of the two or more base stations BS1, BS2, BS3.

In a further optional step M2, it may be determined, whether the current location LOC1 of the mobile station MS1 is determined by the network element AS-NE, BS-NE1 or another entity such as the mobile station MS1, the base station BS1 or another network element of the radio communication network RCN1. If the current location LOC1 is determined by the network element AS-NE, BS-NE1, step M4 may be a next step. Otherwise, step M3 may be a next optional step.

In the next optional step M3, an indication for the current location LOC1 of the mobile station MS1 may be transmitted to the network element AS-NE, BS-NE1. The indication may be based on coordinates of a Cartesian coordinate system or of a geographic coordinate system with longitude and latitude parameters. The indication may compose two-dimensional or three-dimensional coordinates.

In a further step M4, a radio link quality of the radio link RL1 may be determined according to the current location LOC1 of the mobile station MS1. The radio link quality may be for example an SNR value (SNR = signal to noise ratio), an SINR value (SINR = signal to interference and noise ratio), SS (SS = Signal Strength), BER (BER = bit error rate), FER (FER = frame erasure rate), FE (FRE = frequency error), Time Alignment (TA), or a mobile station PL (PL = power level). The radio link quality may be determined by measuring uplink signals, by measuring downlink signals, or by measuring both the uplink signals and the downlink signals. The radio link quality of the uplink signals may be preferably determined by the base station BS1. The radio link quality of the downlink signals may be preferably determined by the mobile station MS1. An averaged radio link quality of both the uplink signals and the downlink signals may be preferably determined by the base station BS1 or by the network element AS-NE, if the network element AS-NE and the base station BS1 are different network nodes (see Figure 1).

In a further optional step M5, it may be determined, whether the radio link quality according to the current location LOC1 of the mobile station MS1 is determined by the network element AS-NE, BS-NE1 or another entity such as the mobile station MS1, the base station BS1 or another network element of the radio communication network RCN1. If the radio link quality according to the current location LOC1 of the mobile station MS1 is determined by the network element AS-NE, 65-NF1, step M7 may be a next step. Otherwise, step M6 may be a next optional step.

In the next optional step M6, an indication of the radio link quality of the radio link RL1 at the current location LOC1 of the mobile station MS1 such as a type of a radio link quality parameter and a value of the radio link quality parameter is transmitted to the network element AS-NE, BS-NE1. If the radio link quality is based on uplink signals, the indication of the radio link quality may be transmitted from the base station BS1 to the network element AS-NE, if the network element AS-NE and the base station BS1 are different network nodes (see Figure 1). If the radio link quality is based on downlink signals, the indication of the radio link quality may be transmitted from the mobile station MS1 to the base station BS-NE1. (see Figure 2) or via the base station BS1 to the network element AS-NE (see Figure 1).

For the averaged radio link qual ity of both the uplink signals and the downlink signals, the indication of the radio link quality or measurement values of the downlink signals may be transmitted from the mobile station MS1 to the base station BS1. Alternatively, the indication of the radio link quality or the measurement values of the downlink signals may be transmitted from the mobile station MS1 to the network element AS-NE, BS-NE1 and the indication of the radio link quality or measurement values of the uplink signals may be transmitted from the base station BS1 to the network element AS-NE, if the network element AS-NE and the base station BS1 are different network nodes (see Figure 1).

In the next step M7, the further localion LOC2 for the mobile station MS1 is determined at the network element AS-NE, BS-NE1, which may comprise the radio link qualily distribution database RLQDD. The indication of the radio link quality of the radio link RL1 at the current location LOC1 of the mobile station MS1 is compared with radio link quality values of locations with a predefined distance around the current location LOC1 of the mobile station MS1. The predefined distance may depend for example on a speed of the mobile station MS1 or on a geographical situation around the current location LOC1 of the mobile station MS1 (e.g. if the current location is surrounded by walls, locations beyond the walls maybe not taken into account).

The network element AS-NE, BS-NE1 may select for example the further location LOC2 with a highest radio link quality within the predefined distance, the further location LOC2 may be a nearest location to the current location LOC1, which provides for example a 10 % better radio link quality than the current location LOC1, or the further location LOC2 may be a location reducing interference in the radio cell C1 and thereby improving an overall network performance.

Preferably, the network element AS-NE, BS-NE1 additionally compares the radio link quality at the current location LOC1 with previously stored radio link qualities for the current location LOC1. Thereby, the network element AS-NE, BS-NE1 is able to verify an actuality of the previously stored radio link qualities for the current location LOC1 but also for the further location LOC2. This verification may influence a decision for the further location LOC2.

In a further preferred embodiment, the radio link quality distribution database RLQDD also stores type and model of mobile stations, which report indications for radio link qualities to the network element AS-NE, BS-NE1. Thereby, the radio link quality distribution database RLQDD is able to sort reported radio link qualities according to locations and according to types and models of mobile stations. This may be useful in decision finding for the further location LOC2, if mobile stations have different receiver sensitivities.

In a further step M8, an indication for the further location LOC2 is transmitted from the network element AS-NE, BS-NE1 to the mobile station MS1.

The indication for the further location LOC2 may be for example an indication of on object of a landscape close to the further location LOC2 such as a street crossing, a street number, a lamppost, a memorial, a manhole cover, a park bench etc.

In an alternative, the indication for the further location LOC2 may be a point of the compass such as N (for north), SW (for south west), NNE (for a middle point of the compass between north and north east), etc. The alternative may be used, if the user of the mobile station MS1 is able to orientate easily via a point of the compass and if preferably a position of the sun and a time of day can be determined by the user.

Preferably the alternative may be used, if the mobile station may comprise an electronic compass based on a Hall sensor or a fluxgate magnetometer and the electronic compass may be used to indicate the point of the compass via a compass rose on a graphical user interface to the user of the mobile station MS1.

Preferably, the indication further provides a distance for example in meters, foots, or yards between the current location LOC1 and the further location LOC2.

In a further alternative, the indication for the further location LOC2 may be an absolute or relative position according to geographical coordinates, if the mobile station MS1 may comprise a receiver for a global navigation satellite system such as GPS (GPS = Global Positioning System) or Galileo and preferably in addition a navigation software.

In a next step M9, the indication for the further location LOC2 is displayed by a GUI (GUI = graphical user interface) such as an LCD (LCD = liquid crystal display) to the user of the mobile station MS1. In an alternative, the indication for the further locution LOC2 is made audible via a voice user interface, which transmits a synthetic voice by a loudspeaker of the mobile station MS1 such as "Please go 20 meters into SW direction.".

After the next step M9, the method MET1 may be stopped by the user of the mobile station MS1 or may be repeated by continuing with the step M1.

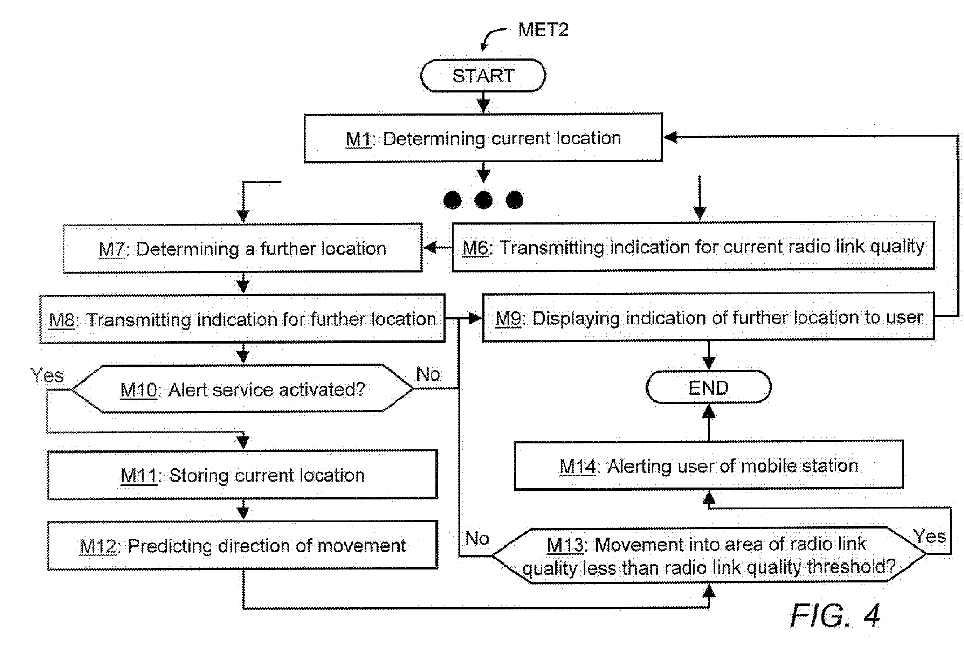

Referring to Figure 4, a block diagram of a method MET2 according to further embodiments of the invention is shown.

The sequence and the number of the steps for performing the method MET2 is not critical, and as can be understood by those skilled in the art, that the sequence and the number of the steps may vary without departing from the scope of the invention, e.g. some of the steps may be performed simultaneously.

In addition to the steps M1 to M9 of the method MET1 indicated by three dots, the method MET2 further comprises steps M10 to M14.

The method MET2 may be started automatically by staring a service at the mobile station MS1. The method MET2 may be started alternatively by the user of the mobile station MS1 for example via the CUI of the mobile station MS1.

In the further step M10, it is verified if an alert service of the method MET2 has been activated. If the alert service has not been activated, the step M9 may be a next step. If the alert service has been activated, the further step M11 moy be a next step.

In the next step M11, the current location LOC1 of the mobile station MS1 is stored in a database of the network element AS-NE, BS-ME1).

In the further step M12, the network element AS, BS-NE1 predicts a movement of the mobile station MS1. Therefore, the network element AS, BS-NE1 compares the current location LOC1 with at least one previously stored location of the mobile station MS1. Preferably, the network element AS, BS-NE1 fits a movement direction to several stared locations of the mobile station MS1.

In the next step M13, the network element AS, BS-NE1 compares a radio link quality of nearby locations within the movement direction of the mobile station MS1 with a predefined radio link quality threshold. The predefined radio link quality may for example depend on a minimum data rate required by a service currently running at the mobile station MS1. If the radio link qualities of the nearby locations are above the predefined radio link quality, the step M9 may be a next step. If the radio link qualities of the nearby locations are below the predefined radio link quality, the further step M14 may be a next step.

In the further step M14, the network element AS, BS-NE1 alerts the user of the mobile station MS1 of a radio link quality degradation. Therefore, the network element AS, BS-NE1 may transmit a message with an alert of the radio link quality degradation to the mobile station MS1. The mobile station MS1 indicates the alert of the radio link quality degradation to the user for example by the loudspeaker or by the display of the mobile station MS1.

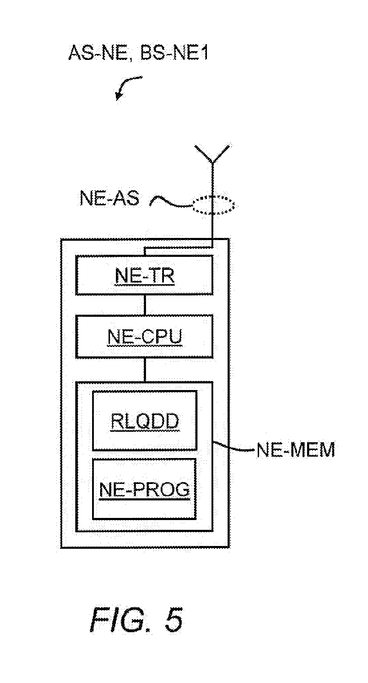

Referring to Figure 5, a block diagram of the network element AS-NE, BS-NE1 according to the embodiments of the invention is shown. The elements in Figure 5 that correspond to elements of Figure 1 or Figure 2 have been designated by same reference numerals.

The network element AS-NE, BS-NE1 may comprise an antenna system NE-AS, a transceiver NE-TR, a central processing unit NE-CPU, and a storage unit NE-MEM.

In an alternative, the network element AS-NE, BS-NE may comprise instead of or in addition to the antenna system NE-AS, a port for a wired connection.

The transceiver NE-TR may be used to transmit to the mobile station MS1 the indication of the further location LOC2, to transmit the alert of the radio link quality degradation to the mobile station MS1, to receive the indication of the current location LOC1 of the mobile station MS1, and to receive the measurement values of the signals measured at the mobile station MS1 and/or the base station BS1.

The storage unit NE-MEM is foreseen for storing a computer readable program NE-PROG and the radio link quality distribution database RLQDD. The storage unit NE-MEM may be a card, a tape, a compact disk, a flash memory, a hard disk, a circuitry with non-volatile RAM, a circuitry with volatile RAM etc.

In an alternative, the radio link quality distribution database RLQDD may be located in a separate network node and may be connected to the network element AS-NE, BS-NE1.

The radio link quality distribution database RLQDD is preferably updated continuously by radio link measurements at base stations and/or mobile stations.

The computer readable program NE-PROG is foreseen for executing steps of the methods MET1 and MET2 according to the embodiments of the invention.

In particular, the computer readable program NE-PROG comprises means for determining the further location LOC2 for the mobile station MS1 depending on the current location LOC1.

The central processing unit NE-CPU is foreseen for executing the computer readable program NE-PROG.

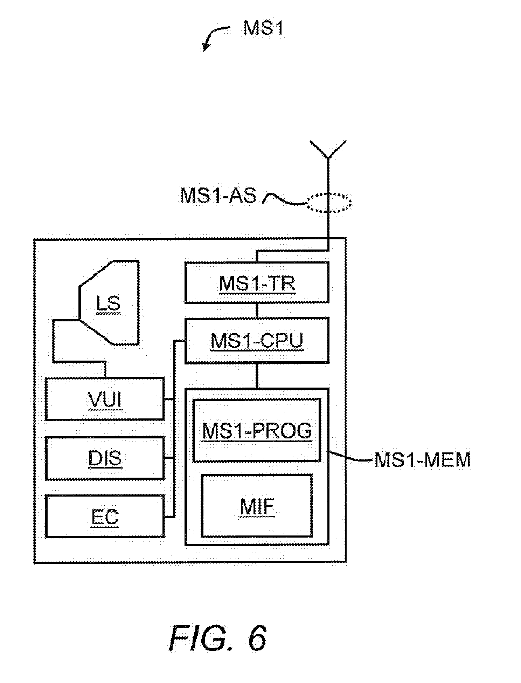

Referring to Figure 6, a block diagram of the mobile station MS1 according to the embodiments of the invention is shown. The elements in Figure 6 that correspond to elements of Figure 1 or Figure 2 have been designated by same reference numerals.

The mobile station MS1 may comprise on antenna system MS1-AS, a transceiver MS1-TR, a central processing unit MS1-CPU, a storage unit MS1-MEM, a display DIS, an electronic compass EC, a voice user interface VUI, and a loudspeaker LS.

The transceiver MS1-TR may be used to connect the mobile station MS1 to the network element ME, to receive the indication of the further location LOC2, to receive the alert of the radio link quality degradation, to transmit the indication of the current location LOC1 of the mobile station MS1, and to transmit the measurement values of the signals measured at the mobile station MS1.

In alternative, a transmitter and a receiver is used at the mobile station MS1 instead of the transceiver MS1-TR.

In further alternatives, the mobile station MS1 does not comprise the voice user interface VUI and/or the electronic compass EC.

The storage unit MS1-MEM is foreseen for storing a computer readable program MS1-PROG and alternatively in addition a map information file MIF for storing a road map. If the mobile station MS1 may comprise a GPS receiver, the map information file MIF may be a navigation software handling signals received via the GPS receiver.

The storage unit MS1-MEM may be a card, a tape, a compact disk, a flash memory, a hard disk, a circuitry with non-volatile RAM, a circuitry with volatile RAM etc.

The map information file MIF may be used at the mobile station MS1 to indicate the user of the mobile station MS1 via the road map on the display DIS of the mobile station MS1 a way to the further location LOC2.

The loudspeaker LS may be used alternatively for indicating the further location LOC2 via the synthetic voice, which is generated by the voice user interface VUI.

The electronic compass EC based on a Hall sensor or a fluxgate magnetometer may be used to indicate the point of the compass via a compass rose on the display DIS to the user of the mobile station MS1.

The computer readable program MS1-PROG is foreseen for executing steps of the methods MET1 and MET2 according to the embodiments of the invention.

In particular, the computer readable program MS1-PROG comprises means for extracting from signals being received via the antenna system MS1-AS and the transceiver MS1-TR the indication of the further location LOC2 and comprises means for outputting the indication of the further location LOC2 to either the display DIS or to the loudspeaker LS via the voice user interface VUI.

The central processing unit MS1-CPU is foreseen for executing the computer readable program MS1-PROG.

## Claims

1. A method for guiding at least one user of at least one mobile station (MS1) in a radio communication network (RCN1, RCN2), said of least one mobile station (MS1) being connected to a network element (AS-NE, BS-NE1) via at least one radio link (RL1),
wherein said method comprises the steps of:
- determining (M7) by said network element (AS-NE, BS-NE1) at least one further location (LOC2) for said at least one mobile station (MS1) depending on a current location (LOC1) of said at least one mobile station (MS1), and
- transmitting (M8) at least one indication of said at least one further location (LOC2) from said network element (AS-NE, BS-NE1) to said at least one mobile station (MS1).

2. Method according to any of the preceding claims, wherein said method further comprising the steps of:
- predicting (M12) by said network element (AS-NE, BS-NE1) at least one current direction of movement of said at least one mobile station (MS1), and
- alerting (M14) by said network element (AS-NE, BS-NE1) via said at least one mobile station (MS1) said at least one user of a radio link quality degradation.

3. Method according to any of the preceding claims, wherein said method further comprising the step of determining (M1) said at least one current location (LOC1) by said network element (AS-NE, BS-NE1).

4. Method according to claim 1 or claim 2, wherein said method further comprising the steps of:
- determining (M1) said at least one current location (LOC1) by a base station (BS1), and
- transmitting (M3) on indication of said at least one current location (LOC1) from said base station (BS1) to said network element (AS-NE).

5. Method according to ony of the preceding claims, wherein said indication is an indication of an object of a landscape close to said at least one further location (LOC2) or an indication of a point of the compass for said at least one further location (LOC2).

6. Method according to claim 5, wherein said indication is an indication further providing a distance between said current location (LOC1) and said at least one further location (LOC2).

7. Method according to any of the preceding claims, wherein said method further comprises the step of measuring signals of said at least one radio link (RL1) and wherein said at least one current location (LOC1) of said at least one mobile station (MS1) is determined by said measured signals.

8. Method according to claim 7, wherein said of least one current location (LOC1) of said at least one mobile station (MS1) is determined by a time delay of arrival of said measured signals or an angle of arrival of said measured signals.

9. Method according to claim 7 or claim 8, wherein said measured signals are downlink signals, and wherein said method further comprises the step of transmitting (M6) measurement values of said measured signals from said at least one mobile station (MS1) to said network element (AS-NE, BS-NE1).

10. Method according to claim 7 or claim 8, wherein said measured signals are uplink signals.

11. A network element (AS-NE, BS-NE1) for guiding at least one user of at least one mobile station (MS1) in a radio communication network (RCN1, RCN2), wherein said network element (AS-NE, BS-NE1) comprising:
- means (NE-AS, NE-TR) for connecting to said at least one mobile station (MS1) via at least one radio link (RL1),
- means (NS-GPU, NE-PROG, RLQDD) for determining at least one further location (LOC2) for said at least one mobile station (MS1) depending on at least one current location (LOC1) of said at least one mobile station (MS1), and
- means (ME-AS, NE-TR) for transmitting at least one indication of said at least one further location (LOC2).

12. Network element (BS-NE1) according to claim 11, wherein said network element (BS-NE1) is a base station.

13. Network element (AS-NE) according to claim 11, wherein said network element (AS-NE) is an application server.

14. A mobile station (MS1) for guiding a user of said mobile, station (MS1) in a radio communication network (RCN1, RCN2), said mobile station (MS1) comprising means (MS1-AS, MS1-TR) for connecting said mobile station (MS1) to a network element (AS-NE, BS-NE1) via a radio link (RL1), wherein said mobile station (MS1) further comprising means (MS1-AS, MS1-TR) for receiving via said radio link (RL1) an indication of a further location (LOC2) for said mobile station (MS1) depending on a current location (LOC1) of said mobile station (MS1).

15. A radio communication network (RCN1, RCN2) comprising at least one network element (AS-HE, BS-NE1) according to claim 11.
